# FASCICULE DE BREVET EUROPEEN

(11) **EP 4 173 962 B1**
(45) Date de publication et mention de la délivrance du brevet: **03.09.2025**
(21) Numéro de dépôt: 22195803.6
(22) Date de dépôt: 15.09.2022
(51) Int. Cl.: B64D 37/32, B64D 37/30

(54) **ENCEINTE CONTENANT UN GAZ D'INERTAGE ET COMPRENANT UN SYSTÈME D ÉVACUATION DE LIQUIDE, AÉRONEF COMPORTANT UNE TELLE ENCEINTE**
GEHÄUSE MIT INERTISIERUNGSGAS UND MIT EINEM FLÜSSIGKEITSAUSSTOSSSYSTEM, FLUGZEUG MIT EINEM SOLCHEN GEHÄUSE
ENCLOSURE CONTAINING AN INERTING GAS AND COMPRISING A LIQUID DISCHARGE SYSTEM, AIRCRAFT COMPRISING SUCH AN ENCLOSURE

(30) Priorité: 27.10.2021 FR 2111391
(43) Date de publication de la demande: 03.05.2023
(73) Titulaire: Airbus Operations (S.A.S.), 31060 Toulouse Cedex 9 (FR)
(72) Inventeur: SOULIE, Adeline, 31060 TOULOUSE (FR)
(74) Mandataire: Bertrandias, Patricia Marie Jacqueline

(56) Documents cités:
- WO-A1-2018/036497
- US-A- 3 101 284
- US-A1- 2007 207 354
- US-A1- 2012 248 251
- US-A1- 2013 153 605
- US-A1- 2017 370 260
- US-A1- 2018 353 977

## Description

La présente demande se rapporte à une enceinte contenant un gaz d'inertage et comprenant un système d'évacuation de liquide ainsi qu'à un aéronef comportant une telle enceinte.

Selon un mode de réalisation, une pile à combustible est raccordée à un premier conduit d'alimentation en hydrogène, à un deuxième conduit d'alimentation en oxygène, à un troisième conduit d'évacuation d'eau, à un quatrième conduit d'alimentation en liquide de refroidissement ainsi qu'à un cinquième conduit d'évacuation du liquide de refroidissement.

Ces différents conduits traversent une enceinte accolée à la pile à combustible et contenant un gaz d'inertage, comme de l'azote par exemple, maintenu à une pression donnée. Le gaz d'inertage permet, en cas de fuite d'hydrogène, de limiter les risques de départ de feu et d'explosion qui pourraient apparaitre en cas de contact entre l'hydrogène et l'oxygène dans l'enceinte. Cette enceinte est équipée d'un capteur configuré pour détecter une concentration d'hydrogène supérieure à un seuil donné ainsi qu'une vanne configurée pour couper l'alimentation en hydrogène lorsque la concentration d'hydrogène détectée par le capteur est supérieure au seuil donné.

En fonctionnement, de l'eau issue du troisième conduit ou du liquide de refroidissement issu d'un des quatrième ou cinquième conduit peut fuir et s'accumuler en partie inférieure de l'enceinte. A partir d'un certain volume, ces liquides doivent être évacués de l'enceinte.

L'évacuation des liquides accumulés en partie inférieure de l'enceinte sans perte de gaz d'inertage s'avère problématique.

Le document US3101284 décrit un système de chauffage continu d'un liquide et de prélèvement de ce liquide chauffé. Le système comporte un réservoir de gaz inerte non condensable et de liquide pourvu de moyens de détection du niveau de liquide accumulé dans le réservoir, d'une vanne de surpression préchargée par un ressort permettant de contrôler la décharge du liquide du réservoir et de moyens pour délivrer un signal des moyens de détection à la vanne de surpression, la valeur du signal délivré dépendant uniquement du niveau de liquide accumulé dans le réservoir, et ledit signal permettant de contrôler l'actionnement de la vanne de surpression.

Le document WO2018/036497 décrit un réservoir de gaz inerte et d'huile pourvu d'un régulateur de flux agencé sur une canalisation reliée à une sortie du réservoir afin de réguler le débit de l'huile en sortie du réservoir et de contrôler la chute de pression dans le réservoir. Ce régulateur de flux est actionné par un ressort combiné gaz-liquide déporté du réservoir.

Le document US2013153605 décrit un récipient de liquide muni de moyens permettant de limiter la quantité de liquide extraite dudit récipient. Afin de prélever le liquide contenu dans ce récipient, ces moyens établissent une connexion fluidique entre l'intérieur du récipient et l'air ambiant.

La présente invention vise à proposer une solution à cette problématique.

A cet effet, l'invention a pour objet une enceinte délimitant une zone intérieure et une zone extérieure, contenant des fluides se présentant sous la forme d'un gaz d'inertage ainsi que d'au moins un liquide à évacuer, la zone extérieure présentant une pression extérieure, la zone intérieure présentant une pression intérieure supérieure à la pression extérieure, ladite enceinte comprenant une partie inférieure au niveau de laquelle s'accumule le liquide, au moins un orifice positionné au niveau de la partie inférieure et configuré pour faire communiquer les zones intérieure et extérieure ainsi qu'un système d'évacuation de liquide positionné au niveau de l'orifice et configuré pour occuper un état non passant dans lequel le système d'évacuation de liquide bloque un écoulement du liquide de la zone intérieure vers la zone extérieure par l'orifice et un état passant dans lequel le système d'évacuation de liquide autorise un écoulement du liquide de la zone intérieure vers la zone extérieure par l'orifice.

Selon l'invention, le système d'évacuation de liquide comprend au moins un élément déformable de manière élastique configuré pour être déformé par la pression intérieure de la zone intérieure de l'enceinte et pour contrôler en fonction de sa déformation l'état passant ou non passant du système d'évacuation de liquide.

Cette solution permet d'obtenir une régulation simple et automatique du volume du liquide dans l'enceinte, sans perte du gaz d'inertage.

Selon un premier mode de réalisation, l'élément déformable est une membrane déformable obturant l'orifice et comportant au moins une perforation la traversant, la membrane déformable étant configurée pour se déformer en fonction de la pression intérieure de la zone intérieure et occuper un état non déformé et un état déformé dans lequel la membrane déformable est étirée en direction de la zone extérieure de l'enceinte, la membrane déformable étant configurée pour que la perforation occupe un état obturé lorsque la membrane déformable est à l'état non déformé ou lorsque la membrane déformable est à l'état déformée et que la pression intérieure de la zone intérieure de l'enceinte est inférieure à une première pression seuil donnée et un état passant lorsque la membrane déformable est à l'état déformé et que la pression intérieure de la zone intérieure de l'enceinte est supérieure ou égale à la première pression seuil donnée.

Selon une autre caractéristique, la membrane déformable est configurée pour que la perforation reste à l'état passant tant que la pression intérieure de la zone intérieure de l'enceinte reste supérieure à une deuxième pression seuil donnée, inférieure à la première pression seuil donnée, et revient à l'état obturé dès que la pression intérieure de la zone intérieure de l'enceinte est égale ou inférieure à la deuxième pression seuil donnée.

Selon une autre caractéristique, la membrane déformable comprend un bord périphérique présentant une section supérieure à la section de l'orifice et une zone de chevauchement plaquée contre l'enceinte. En complément, la au moins une perforation de la membrane déformable est positionnée dans la zone de chevauchement de manière à être obturée par l'enceinte lorsque la membrane déformable est à l'état non déformé et lorsque la membrane déformable est à l'état déformé et que la pression intérieure de la zone intérieure de l'enceinte est inférieure à la première pression seuil donnée, ladite perforation étant au moins partiellement positionnée au droit de l'orifice lorsque la membrane déformable est à l'état déformé et que la pression intérieure de la zone intérieure de l'enceinte est supérieure ou égale à la première pression seuil donnée.

Selon une autre caractéristique, la au moins une perforation de la membrane déformable est positionnée au droit de l'orifice lorsque la membrane déformable occupe l'état non déformé, ladite perforation présentant :
a. une section nulle ne permettant pas le passage des fluides contenus dans l'enceinte lorsque la membrane déformable est à l'état non déformé,
b. une section non nulle permettant le passage du liquide lorsque la membrane déformable est à l'état déformé et que la pression intérieure de la zone intérieure de l'enceinte est supérieure ou égale à la première pression seuil donnée.

Selon une autre caractéristique, la membrane déformable comprend plusieurs perforations traversant la membrane déformable, lesdites perforations étant réparties sur un cercle sensiblement centré par rapport à l'orifice.

Selon une autre caractéristique, la membrane déformable est en élastomère.

Selon un autre mode de réalisation le système d'évacuation de liquide comprend un clapet mobile entre une position fermée dans laquelle le clapet obture l'orifice et une position ouverte dans laquelle le clapet est espacé de l'enceinte et permet un écoulement du liquide vers la zone extérieure de l'enceinte. En complément, l'élément déformable de manière élastique est un élément de rappel configuré pour maintenir le clapet en position fermée tant que la pression intérieure de la zone intérieure de l'enceinte est inférieure à une première pression seuil donnée, et pour autoriser le clapet à se déplacer en position ouverte dès que la pression intérieure de la zone intérieure de l'enceinte est supérieure ou égale à la première pression seuil donnée.

Selon une autre caractéristique, l'élément de rappel est configuré pour que le clapet reste en position ouverte tant que la pression intérieure de la zone intérieure de l'enceinte est supérieure à une deuxième pression seuil donnée inférieure à la première pression seuil donnée et pour que le clapet revienne en position fermée dès que la pression intérieure de la zone intérieure de l'enceinte est inférieure ou égale à la deuxième pression seuil donnée.

L'invention a également pour objet un aéronef comprenant au moins une enceinte selon l'une des caractéristiques précédentes.

D'autres caractéristiques et avantages ressortiront de la description de l'invention qui va suivre, description donnée à titre d'exemple uniquement, en regard des dessins annexés parmi lesquels :
La Figure 1 est une coupe schématique d'une pile à combustible et d'une enceinte contenant un gaz d'inertage et comprenant un système d'évacuation de liquide,
La Figure 2 est une coupe schématique d'un système d'évacuation de liquide illustrant un premier mode de réalisation qui n'est pas conforme aux revendications, en l'absence de liquide à évacuer,
La Figure 3 est une coupe schématique du système d'évacuation de liquide visible sur la figure 2, en présence de liquide à évacuer,
La Figure 4 est une vue de dessus d'une membrane déformable d'un système d'évacuation de liquide illustrant un premier mode de réalisation qui n'est pas conforme aux revendications, en l'absence de liquide à évacuer,
La Figure 5 est une vue de dessus de la membrane déformable visible sur la figure 4, en présence de liquide à évacuer,
La Figure 6 est une vue de dessus d'une membrane déformable d'un système d'évacuation de liquide illustrant un deuxième mode de réalisation conforme aux revendications, en l'absence de liquide à évacuer,
La Figure 7 est une vue de dessus de la membrane déformable visible sur la figure 6, en présence de liquide à évacuer,
La Figure 8 est une coupe schématique d'un système d'évacuation de liquide illustrant un troisième mode de réalisation de l'invention qui n'est pas conforme aux revendications, en l'absence de liquide à évacuer,
La Figure 9 est une coupe schématique du système d'évacuation de liquide visible sur la figure 8, en présence de liquide à évacuer,
La Figure 10 est une coupe selon la ligne X-X de la figure 9.

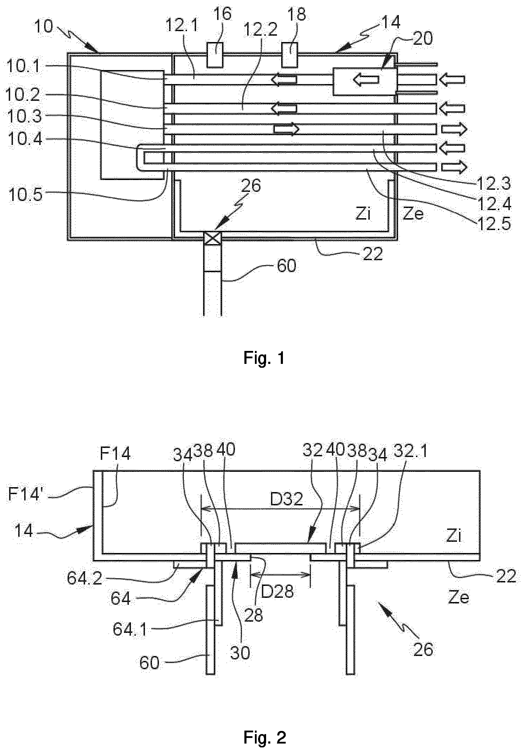

Selon un mode de réalisation visible sur la figure 1, une pile à combustible 10 comprend au moins un premier orifice 10.1 raccordé à un premier conduit 12.1 d'alimentation en hydrogène (par exemple sous forme gazeuse), au moins un deuxième orifice 10.2 raccordé à un deuxième conduit 12.2 d'alimentation en oxygène (par exemple sous forme gazeuse), au moins un troisième orifice 10.3 raccordé à un troisième conduit 12.3 d'évacuation d'eau, au moins un quatrième orifice 10.4 raccordé à un quatrième conduit 12.4 d'alimentation en liquide de refroidissement ainsi qu'au moins un cinquième orifice 10.5 raccordé à un cinquième conduit 12.5 d'évacuation du liquide de refroidissement.

Au moins un tronçon de chacun des premier, deuxième, troisième, quatrième et cinquième conduits 12.1 à 12.5 est positionné dans une enceinte 14.

Selon une configuration, cette enceinte 14 est accolée à la pile à combustible 10 et présente une forme parallélépipédique. Bien entendu, l'invention n'est pas limitée à cette configuration. Ainsi, l'enceinte 14 peut être distante de la pile à combustible 10 et peut avoir différentes formes et dimensions. A titre d'exemple, l'enceinte 14 peut être un tube dans lequel cheminent les premier, deuxième, troisième, quatrième et cinquième conduits 12.1 à 12.5.

Cette enceinte 14 contient un gaz d'inertage. Par un ou le gaz d'inertage, on entend un gaz d'inertage ou un mélange de gaz dont au moins un gaz d'inertage. Un gaz d'inertage est un gaz inerte. A titre d'exemple, le gaz d'inertage est de l'azote.

En fonctionnement, le gaz d'inertage présente une pression donnée Pi qui doit être maintenue supérieure à un seuil donné.

L'enceinte 14 comprend au moins un système de raccordement 16 configuré pour raccorder un conduit d'alimentation en gaz d'inertage afin de remplir l'enceinte 14 en gaz d'inertage.

Selon un mode de réalisation, l'enceinte 14 est équipée d'un capteur 18 configuré pour détecter une concentration d'hydrogène supérieure à un seuil donné ainsi qu'une vanne 20 pour couper l'alimentation en hydrogène lorsque la concentration d'hydrogène détectée par le capteur 18 est supérieure au seuil donné. Bien entendu, l'invention n'est pas limitée à ces équipements pour l'enceinte 14.

Quel que soit le mode de réalisation, l'enceinte délimite une zone intérieure Zi et une zone extérieure Ze, la zone extérieure présentant une pression extérieure, la zone intérieure Zi présentant une pression intérieure (pression dans la zone intérieure Zi) supérieure à la pression extérieure. Cette enceinte 14 est configurée pour ne pas se déformer malgré la différence de pression entre les pressions extérieure et intérieure, par exemple tant que la pression intérieure reste inférieure à vingt fois la pression extérieure.

L'enceinte 14 comprend une face intérieure F14 orientée vers la zone intérieure Zi et une face extérieure F14' orientée vers la zone extérieure Ze.

L'enceinte 14 comprend une partie inférieure 22 au niveau de laquelle s'accumule par gravité au moins un liquide 24, notamment en cas de fuite. Selon une première configuration, la partie inférieure 22 de l'enceinte 14 est sensiblement plane et horizontale.

Selon une autre configuration, la partie inférieure 22 de l'enceinte 14 présente au moins un point bas au niveau duquel s'accumule par gravité, en priorité, le liquide 24.

Selon une application, un aéronef comprend au moins une enceinte 14 accolée à une pile à combustible 10 et traversée par cinq conduits 12.1 à 12.5. Bien entendu, l'invention n'est pas limitée à cette application. Ainsi, l'enceinte 14 pourrait être utilisée dans d'autres domaines techniques, avoir différentes configurations et ne comprendre qu'un seul conduit.

Quel que soit le mode de réalisation, l'enceinte 14 contient un gaz d'inertage et dans certaines circonstances, par exemple en cas de fuite, au moins un liquide 24 s'accumulant contre une partie inférieure 22 de l'enceinte 14. Le gaz d'inertage est à une pression prédéterminée, qui est supérieure à la pression extérieure. A partir d'un certain volume, le liquide 24 doit être évacué à l'extérieur de l'enceinte 14.

Par la suite, on entend par liquide, un liquide ou un mélange de liquides. Ce liquide 24 peut être inflammable. Ce liquide 24 présente une masse volumique plus importante que celle du gaz d'inertage.

L'enceinte 14 comprend au moins un orifice 28, la traversant, pour faire communiquer les zones intérieure et extérieure Zi, Ze. Cet orifice 28 est positionné en partie inférieure 22 de l'enceinte 14 pour permettre d'évacuer le liquide 24 de l'enceinte 14 par gravité. En présence d'un point bas, l'orifice 28 est positionné au niveau du point bas.

Cet orifice 28 présente un diamètre D28. L'enceinte 14 présente un rebord 30 entourant l'orifice 28.

L'enceinte 14 comprend un système d'évacuation de liquide 26, positionné au niveau de l'orifice 28, permettant de contrôler l'écoulement du liquide 24 via l'orifice 28. Le système d'évacuation de liquide 26 étant positionné en partie inférieure 22 ou d'un point bas en présence d'un point bas, même en présence d'un faible volume de liquide, le système d'évacuation de liquide 26 est isolé du gaz d'inertage par le liquide 24.

Selon un premier mode de réalisation visible sur les figures 2 à 5, qui n'est pas conforme aux revendications, le système d'évacuation de liquide 26 comprend une membrane déformable 32 positionnée de manière à obturer l'orifice 28 et reliée à l'enceinte 14, tout autour de l'orifice 28, de manière étanche au fluide (gaz et liquide). Ainsi, en présence ou en absence de liquide 24, l'enceinte 14 est étanche au gaz.

La membrane déformable 32 comprend un bord périphérique 32.1 qui présente un diamètre D32 supérieur au diamètre D28 de l'orifice 28. Selon un agencement, le bord périphérique 32.1 et l'orifice 28 sont sensiblement concentriques. En variante, l'orifice 28 et la membrane déformable 32 peuvent ne pas être circulaires. Dans ce cas, la membrane déformable 32 présente une section supérieure à celle de l'orifice 28.

Selon un agencement, la membrane déformable 32 est reliée à l'enceinte par des éléments de liaison 34 répartis sur sa circonférence. La membrane déformable 32 peut être reliée à l'enceinte 22, autour de l'orifice 28, par tout autre moyen.

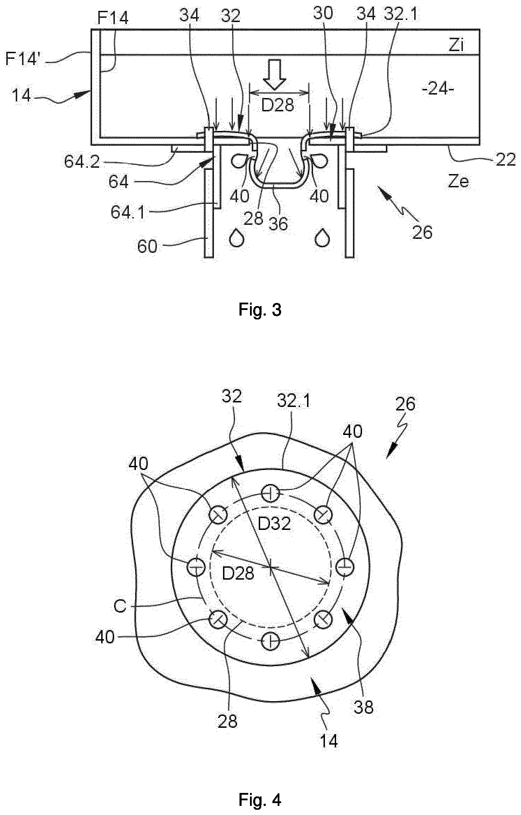

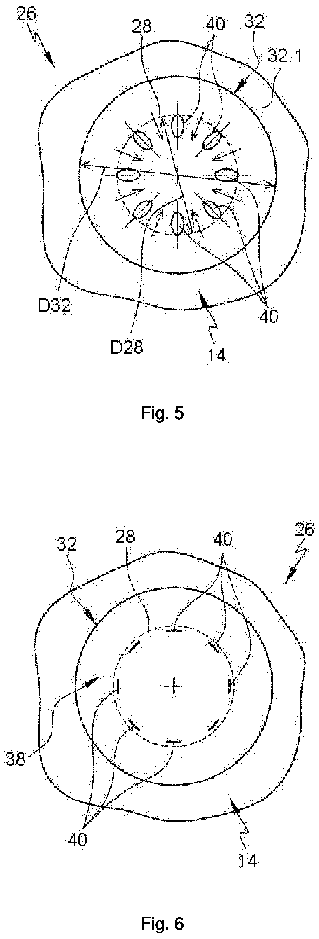

La membrane déformable 32 est configurée pour se déformer de manière élastique et occuper un état non déformé, visible sur la figure 2, dans lequel elle est sensiblement plane et non étirée, et un état déformé, visible sur la figure 3, dans lequel elle est étirée en direction de la zone extérieure Ze de l'enceinte 14 et forme une poche 36 dans laquelle est présent le liquide 24. Lors d'un passage de l'état non déformé à l'état déformé, la membrane déformable 32 s'étire radialement en direction de son centre comme illustré sur la figure 5.

La membrane déformable 32 passe de l'état non déformé à l'état déformé en raison de l'augmentation de la pression intérieure de la zone intérieure Zi de l'enceinte 14 due à l'accumulation de liquide 24.

Ainsi, en l'absence de liquide 24, comme illustré sur la figure 2, la pression intérieure de la zone intérieure Zi est sensiblement égale à la pression Pi du gaz d'inertage. En cas de fuite, comme illustré sur la figure 4, le volume de liquide 24 dans l'enceinte 14 augmente ce qui réduit le volume pour le gaz d'inertage et conduit à augmenter la pression intérieure de la zone intérieure Zi.

La membrane déformable 32 comprend, à l'état non déformé, une zone de chevauchement 38 située entre le bord périphérique 32.1 et l'orifice 28 et plaquée contre le rebord 30 de l'enceinte 14. Selon une configuration, la zone de chevauchement 38 est plaquée contre la face intérieure F14 de l'enceinte 14. En variante, elle pourrait être plaquée contre la face extérieure F14'.

En raison de l'étirement de la membrane déformable 32, à l'état déformé, la zone de chevauchement 38 s'étend partiellement au droit de l'orifice 28.

Selon le premier mode de réalisation visible sur les figures 2 à 5, la membrane déformable 32 comprend au moins une perforation 40 traversant la membrane déformable 32 et positionnée dans la zone de chevauchement 38 de manière à être obturée par l'enceinte 14, et plus particulièrement par le rebord 30, lorsque la membrane déformable 32 est à l'état non déformé, comme illustré sur les figures 2 et 4, et dans un état déformé insuffisant, ladite perforation 40 étant au moins partiellement positionnée au droit de l'orifice 28 et devenant passante lorsque la membrane déformable 32 atteint un niveau de déformation donné, comme illustré sur les figures 3 et 5. Par « état déformé insuffisant » de la membrane déformable 32, on entend que la membrane déformable 32 est à l'état déformé mais que la pression intérieure de la zone intérieure Zi de l'enceinte 14 est inférieure à une première pression seuil donnée, correspondant à un premier volume seuil donné pour le liquide 24. Le niveau de déformation donné de la membrane déformable 32 correspond à l'état déformé de la membrane déformable 32 lorsque la pression intérieure de la zone intérieure Zi de l'enceinte 14 devient supérieure à la première pression seuil donnée.

L'état déformé de la membrane déformable 32 étant sensiblement proportionnel à la pression intérieure de la zone intérieure Zi de l'enceinte 14, la membrane déformable 32 est configurée pour que la perforation 40 occupe un état obturé lorsque la membrane déformable 32 est à l'état non déformé ou lorsque la membrane déformable 32 est dans un état déformé insuffisant, c'est-à-dire que la membrane déformable 32 est à l'état déformé mais que la pression intérieure de la zone intérieure Zi de l'enceinte 14 est inférieure à la première pression seuil donnée, et un état passant lorsque la membrane déformable 32 est à l'état déformé et que la pression intérieure de la zone intérieure Zi de l'enceinte 14 est supérieure ou égale à la première pression seuil donnée. Autrement dit, la perforation 40 est dimensionnée pour être obturée lorsque la membrane déformable 32 est à l'état non déformé ou dans un état déformé insuffisant, et pour laisser passer le liquide 24 lorsque la membrane déformable 32 est à l'état déformé et a atteint le niveau de déformation donné.

Ainsi, la membrane déformable 32, et donc la perforation 40, ainsi que l'enceinte 14, et donc l'orifice 28 et le rebord 30, sont dimensionnés pour que la perforation 40 soit obturée lorsque la membrane déformable 32 est à l'état non déformé ou dans un état déformé insuffisant, laisse passer le liquide 24 lorsque la membrane déformable 32 a atteint le niveau de déformation donné.

Lorsque le liquide 24 est évacué, son volume à l'intérieur de l'enceinte 14 diminue si bien que la pression intérieure de la zone intérieure Zi de l'enceinte 14 diminue.

La membrane déformable 32 est configurée pour que la perforation 40 reste à l'état passant tant que la pression intérieure de la zone intérieure Zi de l'enceinte 14 reste supérieure à une deuxième pression seuil donnée, inférieure à la première pression seuil donnée, et redevient à l'état obturé dès que la pression intérieure de la zone intérieure Zi de l'enceinte 14 est égale ou inférieure à la deuxième pression seuil donnée. Cette deuxième pression seuil donnée correspond à un deuxième volume seuil donné pour le liquide 24 inférieur au premier volume seuil donné. Ainsi en fonctionnement, le système d'évacuation de liquide 26 permet un écoulement du liquide 24 vers la zone extérieure Ze de l'enceinte 14 dès que son volume dans l'enceinte 14 atteint le premier volume seuil donné et bloque l'écoulement du liquide 24 dès que son volume redevient égal ou inférieur au deuxième volume seuil donné.

Le système d'évacuation de liquide 26 étant toujours séparé du gaz d'inertage par le liquide 24 lorsque son volume est compris entre les premier et deuxième volumes seuils donnés, le gaz d'inertage ne s'échappe pas de l'enceinte 14 lors de l'évacuation du liquide 24. Ainsi, son volume et sa pression restent constants.

Cette solution permet d'obtenir une régulation simple et automatique du volume de liquide 24 dans l'enceinte 14, sans capteur et sans perte de gaz d'inertage.

Selon une configuration, qui n'est pas conforme aux revendications, la perforation 40 a une section circulaire avec un diamètre non nul lorsque la membrane déformable 32 est à l'état non déformé, comme illustré sur la figure 4. Cette perforation 40 présente une forme oblongue, orientée radialement, lorsque la membrane déformable 32 est à l'état déformé, comme illustré sur la figure 5.

Selon un agencement, qui n'est pas conforme aux revendications, lorsque la membrane déformable 32 est à l'état déformé, la perforation 40 est séparée de l'orifice 28 d'une distance de l'ordre de quelques millimètres.

Selon un mode de réalisation, qui n'est pas conforme aux revendications, la membrane déformable 32 comprend plusieurs perforations 40, comme illustré sur les figures 4 et 5. Selon un agencement, les perforations 40 sont régulièrement réparties sur un cercle C sensiblement centré par rapport à l'orifice 28, qui présente un diamètre supérieur à celui du diamètre D28 de l'orifice lorsque la membrane déformable 32 est à l'état non déformé.

Selon un mode de réalisation, la membrane déformable 32 est en élastomère et présente une épaisseur de l'ordre de quelques millimètres. L'épaisseur et/ou le matériau de la membrane déformable 32 sont choisis en fonction notamment des première et deuxième pressions seuils données souhaitées.

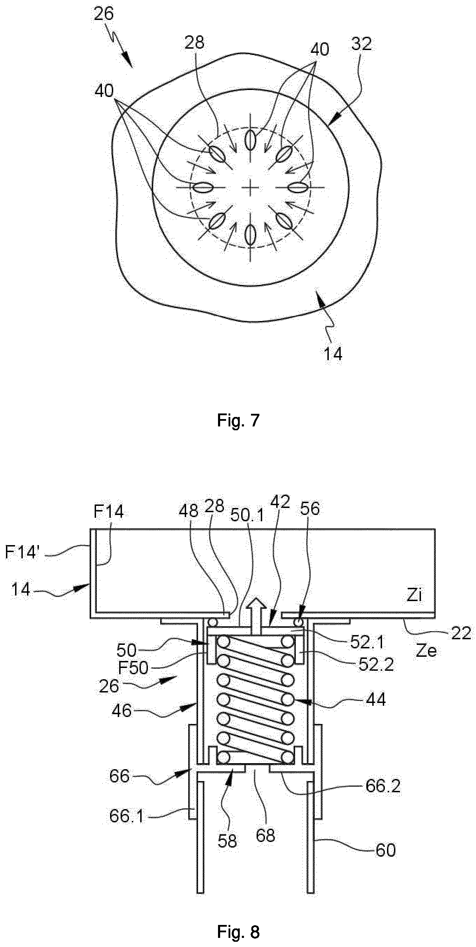

Selon un deuxième mode de réalisation visible sur les figures 6 et 7, proche du premier mode de réalisation, les perforations 40 ne sont pas nécessairement positionnées dans la zone de chevauchement 38. Ainsi, la membrane déformable 32 peut comprendre au moins une perforation 40 positionnée au droit de l'orifice 28 lorsque la membrane déformable 32 est à l'état non déformé, ladite perforation 40 présentant :
a. une section nulle ne permettant pas (i.e. bloquant) le passage des fluides présents dans l'enceinte 14 lorsque la membrane déformable 32 est à l'état non déformé,
b. une section non nulle ne permettant pas le passage du liquide 24 lorsque la membrane déformable 32 est dans un état déformé insuffisant,
c. une section non nulle permettant le passage du liquide 24 lorsque la membrane déformable 32 est étirée et a atteint un état déformé correspondant au niveau de déformation donné.

Selon ce deuxième mode de réalisation, la membrane déformable 32 peut être plaquée contre la face intérieure F14 de l'enceinte 14, contre sa face extérieure F14' ou être positionnée entre les faces intérieure et extérieure.

Comme pour le premier mode de réalisation, la membrane déformable 32 est configurée pour que :
a. la perforation 40 occupe un état obturé tant que la pression intérieure de la zone intérieure Zi de l'enceinte 14 est inférieure à une première pression seuil donnée correspondant à un premier volume seuil donné pour le liquide 24 et un état passant pour le liquide 24 lorsque la pression intérieure de la zone intérieure Zi de l'enceinte 14 est supérieure ou égale à la première pression seuil donnée, et
b. la perforation 40 reste à l'état passant pour le liquide 24 tant que la pression intérieure de la zone intérieure Zi de l'enceinte 14 reste supérieure à une deuxième pression seuil donnée, inférieure à la première pression seuil donnée, et redevient à l'état non passant (i.e. à un état bloquant) pour le liquide 24 dès que la pression intérieure de la zone intérieure Zi de l'enceinte 14 est égale ou inférieure à la deuxième pression seuil donnée.

Selon ce deuxième mode de réalisation, lorsque la membrane déformable 32 est à l'état non déformé, la perforation 40 se présente sous la forme d'une fente, courbe ou rectiligne, orientée sensiblement perpendiculairement à une direction radiale.

Comme pour le premier mode de réalisation, la membrane déformable 32 peut comprendre plusieurs perforations 40 positionnées au droit de l'orifice 28 lorsque la membrane déformable 32 est à l'état non déformé. Selon un agencement, les performations 40 sont régulièrement réparties sur un cercle sensiblement centré par rapport à l'orifice 28, qui présente un diamètre inférieur à celui du diamètre D28 de l'orifice 28 lorsque la membrane déformable 32 est à l'état non déformé.

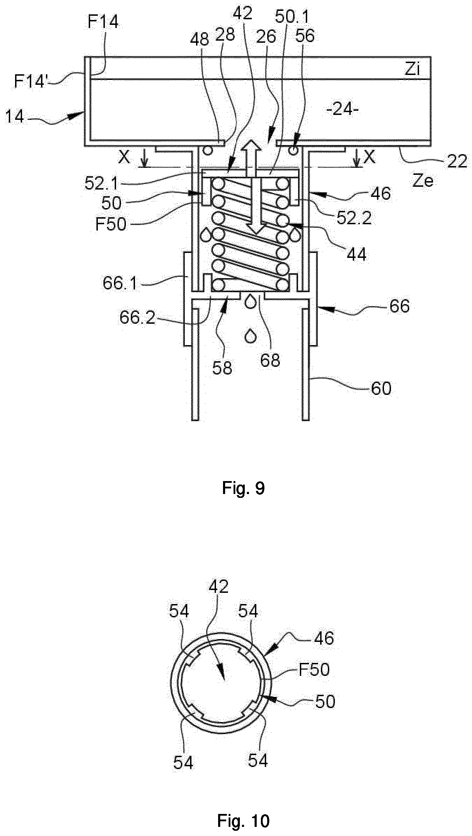

Selon un troisième mode de réalisation, qui n'est pas conforme aux revendications, visible sur les figures 8 à 10, le système d'évacuation de liquide 26 comprend :
a. un clapet 42 mobile entre une position fermée dans laquelle il obture l'orifice 28 et une position ouverte dans laquelle le clapet 42 est espacé de l'enceinte 14 et permet un écoulement du liquide 24 vers la zone extérieure Ze de l'enceinte 14,
b. un élément de rappel 44 configuré pour maintenir le clapet en position fermée, comme illustré sur la figure 8, tant que la pression intérieure de la zone intérieure Zi de l'enceinte 14 est inférieure à une première pression seuil donnée, et pour autoriser le clapet 42 à se déplacer en position ouverte, comme illustré sur la figure 9, dès que la pression intérieure de la zone intérieure Zi de l'enceinte 14 est supérieure ou égale à la première pression seuil donnée.

Selon une configuration, qui n'est pas conforme aux revendications, l'élément de rappel 44 est configuré pour que le clapet 42 reste en position ouverte tant que la pression intérieure de la zone intérieure Zi de l'enceinte 14 est supérieure à une deuxième pression seuil donnée et pour que le clapet 42 revienne en position fermée dès que la pression intérieure de la zone intérieure Zi de l'enceinte 14 est inférieure ou égale à la deuxième pression seuil donnée, cette dernière étant inférieure à la première pression seuil donnée.

Selon un agencement, qui n'est pas conforme aux revendications, le système d'évacuation de liquide 26 comprend un tube 46 positionné dans la zone extérieure Ze. Ce tube 46 s'étend entre une première extrémité reliée à l'enceinte 14 et une deuxième extrémité. Ce tube 46 présente un diamètre intérieur supérieur au diamètre D28 de l'orifice 28 et est positionné de manière centrée par rapport à l'orifice 28 de sorte que l'enceinte 14 présente un rebord 48 tout autour de l'orifice 28 à l'intérieur du tube 46.

Selon un mode de réalisation, qui n'est pas conforme aux revendications, le clapet 42 comprend un piston 50, mobile dans le tube 46, qui présente une face d'extrémité 50.1 orientée vers l'enceinte 14 et en contact avec le liquide 24. Selon un mode de réalisation, le piston 50 comprend un disque 52.1 et une portion tubulaire 52.2 plaquée contre l'une des faces du disque 52.1 et reliée à cette dernière. Le disque 52.1 et la portion tubulaire 52.2 présentent un même diamètre extérieur égal ou légèrement inférieur au diamètre intérieur du tube 46. Ainsi, le piston 50 peut coulisser dans le tube 46. Le piston 50 comprend une face latérale F50 en regard de la face intérieure du tube 46, cette face latérale F50 correspondant à la face extérieure de la portion tubulaire 52.2 et au chant périphérique du disque 52.1. Le piston 50 comprend au moins une rainure 54 positionnée sur la face latérale F50 du piston 50 permettant au liquide 24 de s'écouler entre le tube 46 et le piston 50.

Selon un agencement, qui n'est pas conforme aux revendications, visible sur la figure 10, le piston 50 comprend quatre rainures 54 réparties sur la circonférence du piston 50. Chaque rainure 54 est dimensionnée de manière à ne pas communiquer avec la zone intérieure Zi de l'enceinte 14 lorsque le clapet 42 est en position fermée.

Selon un mode de réalisation, qui n'est pas conforme aux revendications, l'élément de rappel 44 comprend au moins un ressort qui présente un diamètre extérieur inférieur au diamètre intérieur de la portion tubulaire 52.2 du piston 50 de sorte à être partiellement logé dans cette portion tubulaire 52.2.

Les caractéristiques de l'élément de rappel 44 et notamment du ressort sont choisies en fonction des première et deuxième pressions seuils données souhaitées.

Selon une configuration, qui n'est pas conforme aux revendications, le système d'évacuation de liquide 26 comprend un joint d'étanchéité 56 positionné au niveau du rebord 48, autour de l'orifice 28, configuré pour être comprimé entre le clapet 42 et le rebord 48 lorsque le clapet 42 est en position fermée.

Le système d'évacuation de liquide 26 comprend une butée 58 positionnée au niveau de la deuxième extrémité du tube 46 contre laquelle prend appui l'élément de rappel 44. L'élément de rappel 44 est ainsi positionné entre le clapet 42, et plus précisément le disque 52.1, et la butée 58.

Selon un mode de réalisation, le système d'évacuation de liquide 26 comprend au moins un conduit d'évacuation 60 permettant de canaliser le liquide 24. Ce conduit d'évacuation 60 peut être rigide ou souple. Selon une première configuration non représentée, le conduit d'évacuation 60 présente une première extrémité directement reliée à l'enceinte 14 et, au niveau de cette première extrémité, une section supérieure ou égale à celle de l'orifice 28. Selon une autre configuration visible sur les figures 2 et 3, le système d'évacuation de liquide 26 comprend un raccord 64 reliant la première extrémité du conduit d'évacuation 60 et l'enceinte 14. Ce raccord 64 comprend une partie tubulaire 64.1 reliée au conduit d'évacuation 60 ainsi qu'une collerette 64.2 plaquée contre l'enceinte 14 et reliée à cette dernière par des éléments de liaison. Selon une autre configuration visible sur les figures 8 et 9, le système d'évacuation de liquide 26 comprend un raccord 66 reliant le tube 46 et le conduit d'évacuation 60 et comportant un corps tubulaire 66.1 qui s'étend entre une première extrémité dans laquelle s'emmanche le tube 46 et une deuxième extrémité dans laquelle s'emmanche le conduit d'évacuation 60 ainsi qu'une paroi transversale 66.2 qui présente au moins un orifice traversant 68 pour permettre au liquide 24 de s'écouler et qui assure la fonction de butée 58 pour l'élément de rappel 44.

L'invention n'est pas limitée aux modes de réalisation visibles sur les figures 6 à 7, les modes de réalisation visibles sur les figures 2 à 5 et 8 à 10 n'étant pas conformes aux revendications. Ainsi, quel que soit le mode de réalisation, le système d'évacuation de liquide 26 est configuré pour occuper un état non passant dans lequel il bloque un écoulement du liquide 24 de la zone intérieure Zi vers la zone extérieure Ze et un état passant dans lequel il autorise un écoulement du liquide 24 de la zone intérieure Zi vers la zone extérieure Ze et comprend au moins un élément déformable de manière élastique, soit la membrane déformable 32 dans le cadre des revendications ou soit l'élément de rappel 44, selon un exemple non conforme aux revendications, configuré pour être déformé par la pression de la zone intérieure Zi de l'enceinte 14 et contrôler en fonction de sa déformation l'état passant ou non passant du système d'évacuation de liquide 26, ce dernier étant positionné de manière à être isolé par le liquide 24 du gaz d'inertage lorsqu'un liquide 24 est présent dans l'enceinte 14.

Cette solution permet d'obtenir une régulation simple et automatique du volume du liquide 24 dans l'enceinte 14, sans capteur et sans perte de gaz d'inertage.

Le premier mode de réalisation, qui n'est pas conforme aux revendications, permet d'obtenir un système d'évacuation de liquide 26 à partir d'une seule pièce, la membrane déformable 32, sans pièces mobiles les unes par rapport aux autres comme dans le deuxième mode de réalisation, conforme aux revendications.

## Revendications

1. Enceinte délimitant une zone intérieure (Zi) et une zone extérieure (Ze), contenant des fluides se présentant sous la forme d'un gaz d'inertage ainsi que d'au moins un liquide (24) à évacuer, la zone extérieure présentant une pression extérieure, la zone intérieure (Zi) présentant une pression intérieure supérieure à la pression extérieure, ladite enceinte (14) comprenant une partie inférieure (22) au niveau de laquelle s'accumule le liquide (24), au moins un orifice (28) positionné au niveau de la partie inférieure (22) et configuré pour faire communiquer les zones intérieure et extérieure (Zi, Ze) ainsi qu'un système d'évacuation de liquide (26) positionné au niveau de l'orifice (28) et configuré pour occuper un état non passant dans lequel le système d'évacuation de liquide (26) bloque un écoulement du liquide (24) de la zone intérieure (Zi) vers la zone extérieure (Ze) par l'orifice (28) et un état passant dans lequel le système d'évacuation de liquide (26) autorise un écoulement du liquide (24) de la zone intérieure (Zi) vers la zone extérieure (Ze) par l'orifice (28), le système d'évacuation de liquide (26) comprenant au moins un élément déformable de manière élastique configuré pour être déformé par la pression intérieure de la zone intérieure (Zi) de l'enceinte (14) et pour contrôler en fonction de sa déformation l'état passant ou non passant du système d'évacuation de liquide (26), **caractérisée en ce que** l'élément déformable est une membrane déformable (32) obturant l'orifice (28) et comportant au moins une perforation (40) traversant la membrane déformable (32), la membrane déformable (32) étant configurée pour se déformer en fonction de la pression intérieure de la zone intérieure (Zi) et occuper un état non déformé et un état déformé dans lequel la membrane déformable (32) est étirée en direction de la zone extérieure (Ze) de l'enceinte (14), la membrane déformable (32) étant configurée pour que la perforation (40) occupe un état obturé lorsque la membrane déformable (32) est à l'état non déformé ou lorsque la membrane déformable (32) est à l'état déformé et que la pression intérieure de la zone intérieure (Zi) de l'enceinte (14) est inférieure à une première pression seuil donnée et un état passant lorsque la membrane déformable (32) est à l'état déformé et que la pression intérieure de la zone intérieure (Zi) de l'enceinte (14) est supérieure ou égale à la première pression seuil donnée, et **en ce que** la au moins une perforation (40) de la membrane déformable (32) est positionnée au droit de l'orifice (28) lorsque la membrane déformable (32) occupe l'état non déformé, ladite perforation (40) présentant :
- une section nulle ne permettant pas le passage des fluides contenus dans l'enceinte (14) lorsque la membrane déformable (32) est à l'état non déformé,
- une section non nulle permettant le passage du liquide (24) lorsque la membrane déformable (32) est à l'état déformé et que la pression intérieure de la zone intérieure (Zi) de l'enceinte (14) est supérieure ou égale à la première pression seuil donnée.

2. Enceinte selon la revendication 1, **caractérisée en ce que** la membrane déformable (32) est configurée pour que la perforation (40) reste à l'état passant tant que la pression intérieure de la zone intérieure (Zi) de l'enceinte (14) reste supérieure à une deuxième pression seuil donnée, inférieure à la première pression seuil donnée, et revient à l'état obturé dès que la pression intérieure de la zone intérieure (Zi) de l'enceinte (14) est égale ou inférieure à la deuxième pression seuil donnée.

3. Enceinte selon l'une des revendications précédentes, **caractérisée en ce que** la membrane déformable (32) comprend plusieurs perforations (40) traversant la membrane déformable (32), lesdites perforations (40) étant réparties sur un cercle (C) sensiblement centré par rapport à l'orifice (28).

4. Enceinte selon l'une des revendications précédentes, **caractérisée en ce que** la membrane déformable (32) est en élastomère.

5. Aéronef comprenant au moins une enceinte selon l'une des revendications précédentes.

## Patentansprüche

1. Gehäuse, das einen Innenbereich (Zi) und einen Außenbereich (Ze) begrenzt, die Fluide in Form eines Inertgases sowie mindestens einer abzuleitenden Flüssigkeit (24) enthalten, wobei der Außenbereich einen Außendruck besitzt, der Innenbereich (Zi) einen Innendruck besitzt, der höher ist als der Außendruck, wobei das Gehäuse (14) einen unteren Teil (22) aufweist, in dem sich die Flüssigkeit (24) ansammelt, mindestens eine Öffnung (28), die auf Höhe des unteren Teils (22) angeordnet und so konfiguriert ist, dass sie den Innen- und Außenbereich (Zi, Ze) miteinander verbindet sowie ein Flüssigkeitsableitungssystem (26) umfasst, das an der Öffnung (28) angeordnet und so konfiguriert ist, dass es einen nicht durchlässigen Zustand einnimmt, in dem das Flüssigkeitsableitungssystem (26) einen Durchfluss der Flüssigkeit (24) aus dem Innenbereich (Zi) in den Außenbereich (Ze) durch die Öffnung (28) blockiert, und einen durchlässigen Zustand, in dem das Flüssigkeitsableitungssystem (26) einen Durchfluss der Flüssigkeit (24) aus dem Innenbereich (Zi) in den Außenbereich (Ze) durch die Öffnung (28) zulässt, wobei das Flüssigkeitsableitungssystem (26) mindestens ein elastisch verformbares Element aufweist, das so konfiguriert ist, dass es durch den Innendruck des Innenbereichs (Zi) des Gehäuses (14) verformt wird und in Abhängigkeit von seiner Verformung den durchlässigen oder nicht durchlässigen Zustand des Flüssigkeitsableitungssystems (26) steuert, **dadurch gekennzeichnet, dass** das verformbare Element eine die Öffnung (28) verschließende verformbare Membran (32) ist, die mindestens eine die verformbare Membran (32) durchquerende Perforation (40) umfasst, wobei die verformbare Membran (32) so konfiguriert ist, dass sie sich in Abhängigkeit von dem Innendruck des Innenbereichs (Zi) verformt und einen unverformten Zustand und einen verformten Zustand einnimmt, in dem die verformbare Membran (32) in Richtung des Außenbereichs (Ze) des Gehäuses (14) gedehnt ist, wobei die verformbare Membran (32) so konfiguriert ist, dass die Perforation (40) einen verschlossenen Zustand einnimmt, wenn sich die verformbare Membran (32) in dem unverformten Zustand befindet oder wenn sich die verformbare Membran (32) in dem verformten Zustand befindet und der Innendruck des Innenbereichs (Zi) des Gehäuses (14) niedriger als ein erster vorgegebener Schwellendruck ist, und einen Durchlasszustand einnimmt, wenn sich die verformbare Membran (32) in dem verformten Zustand befindet und der Innendruck des Innenbereichs (Zi) des Gehäuses (14) größer oder gleich dem ersten vorgegebenen Schwellendruck ist, und dass die mindestens eine Perforation (40) der verformbaren Membran (32) in dem unverformten Zustand der verformbaren Membran (32) senkrecht über der Öffnung (28) angeordnet ist, wobei die Perforation (40) Folgendes besitzt:
- einen Querschnitt von Null, der das Durchlassen der in dem Gehäuse (14) enthaltenen Fluide nicht zulässt, wenn sich die verformbare Membran (32) in dem unverformten Zustand befindet,
- einen von Null verschiedenen Querschnitt, der das Durchlassen der Flüssigkeit (24) ermöglicht, wenn sich die verformbare Membran (32) in dem verformten Zustand befindet und der Innendruck des Innenbereichs (Zi) des Gehäuses (14) größer oder gleich dem ersten vorgegebenen Schwellenwertdruck ist.

2. Gehäuse nach Anspruch 1, **dadurch gekennzeichnet, dass** die verformbare Membran (32) so konfiguriert ist, dass die Perforation (40) in dem Durchlasszustand bleibt, solange der Innendruck des Innenbereichs (Zi) des Gehäuses (14) über einem zweiten vorgegebenen Schwellenwert liegt, der niedriger ist als der erste vorgegebene Schwellenwert, und in den verschlossenen Zustand zurückkehrt, sobald der Innendruck des Innenbereichs (Zi) des Gehäuses (14) gleich oder kleiner als der zweite vorgegebene Schwellenwertdruck ist.

3. Gehäuse nach einem der vorhergehenden Ansprüche, **dadurch gekennzeichnet, dass** die verformbare Membran (32) mehrere Perforationen (40) aufweist, die die verformbare Membran (32) durchsetzen, wobei die Perforationen (40) auf einem Kreis (C) verteilt sind, der im Wesentlichen in Bezug auf die Öffnung (28) zentriert ist.

4. Gehäuse nach einem der vorhergehenden Ansprüche, **dadurch gekennzeichnet, dass** die verformbare Membran (32) aus Elastomer besteht.

5. Luftfahrzeug, welches mindestens ein Gehäuse nach einem der vorhergehenden Ansprüche aufweist.

## Claims

1. Enclosure delimiting an internal zone (Zi) and an external zone (Ze), containing fluids in the form of an inerting gas and of at least one liquid (24) to be discharged, the external zone exhibiting an external pressure, the internal zone (Zi) exhibiting an internal pressure greater than the external pressure, said enclosure (14) comprising a lower part (22) in which the liquid (24) accumulates, at least one orifice (28) positioned in the lower part (22) and configured to place the internal and external zones (Zi, Ze) in communication, and a liquid discharging system (26) positioned at the orifice (28) and configured to take up a closed state in which the liquid discharging system (26) prevents the liquid (24) from flowing from the internal zone (Zi) to the external zone (Ze) through the orifice (28) and an open state in which the liquid discharging system (26) allows the liquid (24) to flow from the internal zone (Zi) to the external zone (Ze) through the orifice (28), the liquid discharging system (26) comprising at least one elastically deformable element configured to be deformed by the internal pressure of the internal zone (Zi) of the enclosure (14) and, depending on its deformation, to control the open or closed state of the liquid discharging system (26), **characterized in that** the deformable element is a deformable membrane (32) closing off the orifice (28) and having at least one perforation (40) passing through the deformable membrane (32), the deformable membrane (32) being configured to deform depending on the internal pressure of the internal zone (Zi) and to take up a non-deformed state and a deformed state in which the deformable membrane (32) is stretched in the direction of the external zone (Ze) of the enclosure (14), the deformable membrane (32) being configured such that the perforation (40) takes up a closed-off state when the deformable membrane (32) is in the non-deformed state or when the deformable membrane (32) is in the deformed state and the internal pressure of the internal zone (Zi) of the enclosure (14) is lower than a first given threshold pressure and an open state when the deformable membrane (32) is in the deformed state and the internal pressure of the internal zone (Zi) of the enclosure (14) is greater than or equal to the first given threshold pressure, and **in that** the at least one perforation (40) of the deformable membrane (32) is positioned in line with the orifice (28) when the deformable membrane (32) takes up the non-deformed state, said perforation (40) having:
- a zero cross section that does not allow the passage of the fluids contained in the enclosure (14) when the deformable membrane (32) is in the non-deformed state,
- a non-zero cross section that allows the passage of the liquid (24) when the deformable membrane (32) is in the deformed state and the internal pressure of the internal zone (Zi) of the enclosure (14) is greater than or equal to the first given threshold pressure.

2. Enclosure according to Claim 1, **characterized in that** the deformable membrane (32) is configured such that the perforation (40) remains in the open state as long as the internal pressure of the internal zone (Zi) of the enclosure (14) remains greater than a second given threshold pressure, lower than the first given threshold pressure, and returns to the closed-off state as soon as the internal pressure of the internal zone (Zi) of the enclosure (14) is equal to or lower than the second given threshold pressure.

3. Enclosure according to either of the preceding claims, **characterized in that** the deformable membrane (32) comprises a plurality of perforations (40) passing through the deformable membrane (32), said perforations (40) being distributed in a circle (C) that is substantially centred with respect to the orifice (28).

4. Enclosure according to one of the preceding claims, **characterized in that** the deformable membrane (32) is made of elastomer.

5. Aircraft comprising at least one enclosure according to one of the preceding claims.
